# EUROPEAN PATENT SPECIFICATION

(11) **EP 3 098 950 B1**
(45) Date of publication and mention of the grant of the patent: **18.11.2020**
(21) Application number: 15169944.4
(22) Date of filing: 29.05.2015
(51) Int. Cl.: H02M 1/00, H02M 1/08, H02M 1/15, H02M 3/335, H02M 7/48, H02M 7/5387

(54) **SINGLE STAGE LOW VOLTAGE INPUT DC/AC INVERTER**
EINSTUFIGER NIEDERSPANNUNGS-EINGANGS-DC/AC-WANDLER
INVERSEUR CC/CA D'ENTRÉE À FAIBLE TENSION À UN SEUL ÉTAGE

(43) Date of publication of application: 30.11.2016
(73) Proprietor: Eaton Intelligent Power Limited, Dublin 4 (IE)
(72) Inventor: Bekiropoulos, Athanasios, 60100 Katerini (GR); Deshpande, Praveen, 411052 Pune (IN); Verma, Vishal, Bhopal (IN)
(74) Representative: BRP Renaud & Partner mbB Rechtsanwälte Patentanwälte Steuerberater

(56) References cited:
- EP-A2- 2 571 154
- WO-A2-98/43346
- GB-A- 2 187 312
- US-A- 5 371 440
- US-A- 5 828 558
- US-A1- 2005 141 252
- US-A1- 2015 016 159

## Description

### Field of the Invention

The present invention relates to a single stage inverter, and more particularly to a single stage low voltage input DC/AC inverter.

### Background of the Invention

From US 7,333,349 B2, a single-stage buck-boost inverter is provided, using three or four power semiconductor switches and two coupled inductors in a flyback arrangement. The inverter can handle a wide range of dc input voltages and produce a fixed ac output voltage. The inverter is well suited to distributed power generation systems such as photovoltaic and wind power and fuel cells, for standalone or grid connected applications. The inverter has a single charge loop, a positive discharge loop and a negative discharge loop.

US 5,828,558 A discloses a controller and ring generator circuit realized therefrom utilizing an open loop flyback topology to achieve a desired output voltage waveform. A characteristic feature of the controller is that it provides the required signals to control a ring generator circuit having an open loop fly back topology. The controller functions to generate a PWM signal that is used to switch the primary of a transformer on and off. The controller includes the necessary functionality to control the duty cycle of the generated PWM signal so as to produce a sine wave output on the secondary of the transformer. The controller also includes overcurrent protection circuitry that tracks the load current by sensing the current through the primary winding. In addition, the circuit permits negative current in the secondary by use of a synchronous rectifier circuit coupled to an additional secondary transformer winding. An output bridge circuit creates a full sine wave from the generated half wave output.

US 2015/016159 A1 discloses a multiphase power converter circuit includes at least two single phase power converter circuits. Each single phase power converter circuit includes at least one converter series circuit with a number of converter units. The converter series circuit is configured to output a series circuit output current. A synchronization circuit is configured to generate at least one synchronization signal. At least one of the converter units is configured to generate an output current such that at least one of a frequency and a phase of the output current is dependent on the synchronization signal.

EP 2 571 154 A2 discloses a power conversion system which includes a first converter coupled to a power source, wherein the first converter includes an input side, and an output side electrically isolated from the input side. The power conversion system also includes a second converter coupled to the power source, wherein the second converter includes an input side, and an output side electrically isolated from the input side. The second converter input side is coupled in parallel with the first converter input side, and the second converter output side is coupled in series with the first converter output side. The power conversion system also includes an inverter coupled to the first converter output side and to the second converter output side, and the inverter supplies alternating current to an electrical distribution network.

US 5,371,440 A discloses a miniature electronic ballast with low radio frequency interference (RFI) for operating a discharge lamp by amplitude modulation and two frequency operation. A high frequency operating voltage (approximately 1-2 MHz) is generated and is amplitude modulated at a relatively lower frequency (approximately 20-50 KHz). This operating voltage is demodulated to suppress the high frequency carrier voltage (1-2 MHz) and the low frequency modulating signal (20-50 KHz) itself is applied to the discharge lamp to energize same. The use of the high frequency operating voltage makes it possible to reduce the size of the magnetic components in the electronic ballast, whereas the low frequency voltage actually applied to the discharge lamp avoids problems of RFI that otherwise would occur if the high frequency carrier voltage itself was applied to the discharge lamp.

GB 2 187 312 A discloses a bridge circuit for controlling the supply of current to a load from a d.c. source. The bridge circuit includes four semi-conductor switches each in parallel with a diode. The voltage across the load is fed back to be compared with the instantaneous value of an input wave form of desired shape, and any error between the desired voltage and the actual voltage produces an error signal which controls by logic means a pulse width modulator for appropriate control of the switches. If the error is positive the circuit will alternately draw current through the load from the supply and allow the current to free wheel in the bridge circuit, whereas if the error is negative the circuit will alternately arranged for current in the load to be regenerated to the supply and to free wheel in the bridge circuit. Fairly accurate tracking of the input wave form can be achieved. The load may be a linear motor driving a reciprocating compressor.

WO98/43346 A2 discloses an apparatus for generating an analog AC voltage signal from a DC voltage source. A high-frequency switched-mode power converter bi-directionally transferring power generates from a DC voltage a low-frequency voltage in the form of a full-wave rectified sine wave or another full-wave rectified waveform. A full-bridge inverter converts the voltage in the form of a full-wave rectified sine wave or another full-wave rectified wave form into a voltage in the form of a pure sine wave or another waveform. The full-bridge inverter operates at the frequency of said sine wave or another waveform.

US 2005/0141252 A1 discloses a portable electronic device having integral programming circuitry for signaling a power converter connected thereto to provide suitable power signals. Integrating the programming circuitry into the portable electronic device reduces the manufacturing cost and size of the power converter cable connector that is directly coupled to the portable electronic device. The disclosure includes integrating the programming circuitry as part of the portable device electronics, or, onto the portable electronic device connector itself. This programming circuitry can comprise of at least one electrical component that may be passive or active.

### Summary of the Invention

According to the present invention, a wave shaping, filter and residual voltage removing circuit is provided as set forth in claim 1 and consists of a comparator, a second voltage divider consisting of a series connection of a third resistor and a fourth resistor and comprising a first, a second and a third terminal, a capacitor comprising a first and a second terminal, a fifth resistor comprising a first and a second terminal, and a first transistor having a base, and a first and a second terminal, wherein an input of the wave shaping, filter and residual voltage removing circuit is connected to the first terminal of the second voltage divider, the first terminal of the capacitor, and the first terminal of the fifth resistor, and configured to receive a full rectified sine wave signal, wherein the second terminal of the second voltage divider, the second terminal of the capacitor and the second terminal of the first transistor are all connected to ground, wherein the first terminal of the first transistor is connected to the second terminal of the fifth resistor, and wherein the comparator has a first input connected to the third terminal of the voltage divider, which is a node between the third resistor and the fourth resistor, a second input for connection with a reference full rectified sine wave generator, and an output connected to the base of the first transistor, wherein the comparator is configured to compare the full rectified sine wave signal with a reference full rectified sine wave signal, provided by said reference full rectified sine wave generator, and drive the base of the first transistor so that an output of the wave shaping, filter and residual voltage removing circuit follows the reference full rectified sine wave signal, hence removing a residual charge from the capacitor. Preferably, the first transistor is an npn transistor.

According to another, more global aspect of the present invention, a single stage DC/AC inverter is provided as set forth in claim 3 and comprises an inverter circuit, a wave shaping, filter and residual voltage removing circuit as set forth above, connected to an output of the inverter circuit, a reference full rectified sine wave generator connected to the adder/subtractor logic of the inverter circuit and connected to the second input of the comparator of the wave shaping, filter and residual voltage removing circuit, and an H-bridge circuit connected between an output of the wave shaping, filter and residual voltage removing circuit and ground. Preferably, the H-bridge circuit comprises a second transistor, a third transistor, a fourth transistor, a fifth transistor, a second diode, a third diode, a fourth diode, and a fifth diode, connected in an H-bridge configuration. In a preferred embodiment, the second to fifth transistors are MOSFET transistors (MOSFET = metal oxide semiconductor field effect transistor).

The present invention provides an improved single stage DC/AC inverter. The disclosed inverter is particularly suited for low voltage input. It significantly reduces the overall circuit complexity, space requirements, hardware components, development cost and improves reliability. The major challenge is to boost a low voltage DC to high voltage pure sine wave in a single stage with minimum components and small PCB (printed circuit board) size.

The improved inverter with its new topology requires only a few components; in a preferred embodiment, the inverter may be constituted by a PWM converter, comparator/amplifier, a small high frequency transformer, four MOSFETs and resistors and capacitors. Therefore, the overall circuit can be accommodated in very small size PCB.

The inverter does not need any special filter and removes output voltage ripples using a residual voltage discharge circuit.

The output AC voltage is obtained by switching the MOSFETS connected to form a H-bridge circuit. Here, pulse-width-modulated (PWM) sinusoidal modulation of the duty ratio control is not required thereby reducing overhead software and simplifying the control mechanism.

### Brief Description of the Drawings

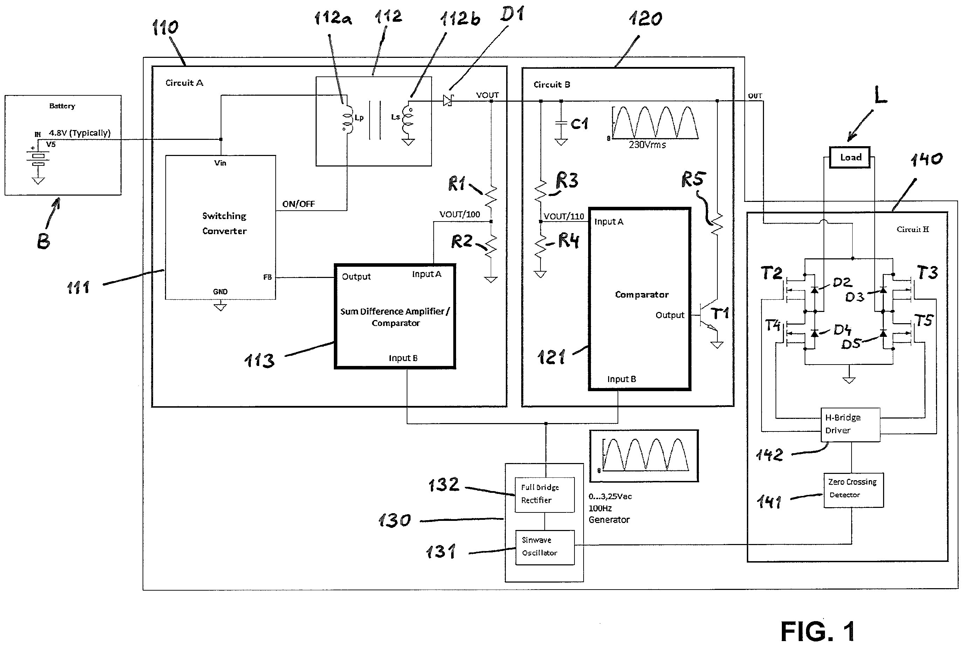

- Fig. 1: is a schematic circuit diagram showing an exemplary implementation of a single stage DC/AC inverter according to the present invention as applied for driving a load with a battery.

### Detailed Description of the Preferred Embodiment

A single stage DC/AC inverter according to the present invention converts a DC input to a rectified sine wave and then unfolds it to generate the full sine wave using a PWM based switching circuit. The design takes the low voltage input from a DC source and boosts it using a Flyback mechanism. The feedback input of the switching converter is modulated using a reference full rectified sine wave. The transistor based wave shaping circuitry smoothens the output wave to make it a pure sine wave.

More particularly, as shown in Fig. 1, a single stage DC/AC inverter 100 is connected between a battery B as a DC source and a load L requiring AC. The single stage DC/AC inverter comprises an inverter circuit 110 (also designated as Circuit A in Fig. 1), a wave shaping, filter and residual voltage removing circuit 120 (also designated as Circuit B in Fig. 1), connected to an output of the inverter circuit 110, a reference full rectified sine wave generator 130, and an H-bridge circuit 140 connected between an output of the wave shaping, filter and residual voltage removing circuit and ground.

The reference full rectified sine wave generator 130 may preferably generate a full rectified sine wave signal having an amplitude of 0 ... 3.25 Vdc and having a frequency of 100 Hz.

Preferably, the battery B is a low voltage battery typically having a nominal voltage of 4.8 V. Of course, batteries having other nominal voltages may be used. The output of the battery B is connected to an input of the inverter circuit 110 which is also the input of the single stage DC/AC inverter 100.

The inverter circuit 110 (which is also labelled as "Circuit A" in Fig. 1) consists of a switching converter (or switching regulator) 111 having a first input Vin, a second input, a feedback input FB, and a connection to ground, a rectifying diode D1, a transformer 112 having a primary winding 112a (acting as a primary inductivity Lp) and a secondary winding 112b (acting as a secondary inductivity Ls), the primary winding 112a having a first terminal connected to the input of the inverter circuit 110 and connected to a first input Vin of the switching converter 111, and having a second terminal connected to the second input of the switching converter 111, the secondary winding 112b having a first terminal connected to the rectifying diode D1 and having a second terminal connected to ground, and a sine modulated feedback loop circuit consisting of a first voltage divider and an adder/subtractor logic having an output connected to the feedback input FB of the switching converter 111. The first voltage divider consists of a first resistor R1 and a second resistor R2 connected in series between the output of the rectifying diode D1 and ground. The adder/subtractor logic comprises a sum difference amplifier/comparator 113 having a first input connected to a first node between the first resistor R1 and the second resistor R2 and having a second input connected to the reference full rectified sine wave generator 130. The sum difference amplifier/comparator 113 is configured to feed back a feedback signal from the first node between the first resistor R1 and the second resistor R2 of the first voltage divider to the feedback input FB of the switching converter 111, the feedback signal being modulated by a modulation signal received by the second input.

The switching converter (or switching regulator) 111 may be implemented as an integrated circuit (IC) as any standard off-the-shelf switching regulator with or without integrated power switch (MOSFET or bipolar junction transistor (BJT)), it generates a PWM controlled output signal based on the feedback input and control logic. The switching converter 111 may include a Pulse Width Modulator (PWM) on high frequency where a switch (MOSFET or BJT) charges a coil or the primary winding of a transformer, in order to create a higher voltage output (Step-Up) than the input voltage. The switching converter 111 has voltage feedback in order to measure the output voltage Vout and self-adjust the frequency and/or duty cycle. It could also be a microcontroller with same functionality and additional circuit.

The feedback input (or pin) FB is used to regulate the output voltage Vout using a fixed internal voltage reference of the switching converter 111. In this case the feedback input FB is connected to the external sum-difference amplifier/ comparator 113 which compares the output voltage (divided e. g. by 100 times by means of the first voltage divider R1, R2) (= Input A) with the signal generated by the external sine wave generator 130 (e. g. 0...3,25Vdc @ 100 Hz) (= Input B) and gives a feedback signal to
a. increase the output voltage Vout if Input A < Input B, or
b. stop the increment (like stop the operation of PWM Step-Up Controller) if Input A > Input B.

The input voltage Vin is input to the switching regulator 111 and is also connected the one terminal of the primary winding 112a of the transformer 112. The other terminal of the primary winding 112a is connected to a power switch (not shown, but which may be internal or external of the switching regulator 111) driven by the PWM control logic of the switching regulator 111.

When the power switch is ON the transformer 112 stores the energy and later, during the OFF period of the switch, the stored energy gets transferred to the output.

Sum difference amplifier/comparator 113 is basically a comparator circuit, and can be implemented by discrete devices or also as an IC.

The output of the sum difference amplifier/comparator 113 which goes to the feedback input FB of the switching converter 111 is the difference between the first input from the first voltage divider R1, R2 (shown in Fig. 1 at the top of the sum difference amplifier/comparator 113) and the second input from the reference full rectified sine wave generator 130 (shown in Fig. 1 at the bottom of the sum difference amplifier/comparator 113). The sum difference amplifier/comparator 113 also has a internal DC reference level (as per the switching converter FB pin DC reference) added to the difference mentioned above.

The specifications of the transformer 112 will depend on the available DC input voltage and the desired output voltage and power requirements. For example, for a typical DC input voltage of 4.8 V and a typical AC output voltage of 230V, a ratio of the number of windings between the primary inductance Lp (primary winding 112a) and the secondary inductance Ls (secondary winding 112b) could be 1:10, with Lp= ∼47µH, Ls=∼4.7mH.

The wave shaping, filter and residual voltage removing circuit 120 (also referred to as "Circuit B" in Fig. 1) consists of a comparator (or comparator circuit) 121, a second voltage divider consisting of a third resistor R3 and a fourth resistor R4, a capacitor C1, a fifth resistor R5, and a first transistor T1 having a base. An input of the wave shaping, filter and residual voltage removing circuit 120 is connected to the second voltage divider, the capacitor C1, and the fifth resistor R5. Moreover, the comparator 121 has a first input connected to a node between the third resistor R3 and the fourth resistor R4, a second input connected to the reference full rectified sine wave generator 130, and an output connected to the base of the first transistor T1. Preferably, the first transistor T1 is an npn transistor.

The comparator, or comparator circuit, 121 can be implemented by discrete devices or also as an IC. The first input from the second voltage divider R3, R4 (from the top left in Fig. 1) and second input from the reference full rectified sine wave generator 130 (from the bottom in Fig. 1) are compared with each other in the comparator 121. The first transistor T1 is driven from the output of the comparator 121 so that the output follows the full rectified sine wave reference, hence removing the residual charge from the output capacitor.

The comparator 121 compares the output voltage Vout (divided e. g. by 100 times by means of the first voltage divider R1, R2) (= Input A) with the signal generated by the external sine wave generator 130 (e. g. 0...3,25Vdc @ 100 Hz) (= Input B) and:
1. activates the output so that the transistor switches through and pulls down the voltage if Input A > Input B, or
2. does nothing, i..e. does not activate the output and does not switch the transistor, if Input A < Input B.

This comparator circuit is particularly suited for loads (lamps) with capacitance.

The reference full rectified sine wave generator 130 generates a reference full rectified sine wave and feeds this signal as a reference to the adder/subtractor logic of the inverter circuit 110 and to the second input of the comparator 121 of the wave shaping, filter and residual voltage removing circuit 120. More specifically, the reference full rectified sine wave generator 130 comprises a sine wave oscillator circuit 131 followed by a full wave diode bridge rectifier 132.

The H-bridge circuit 140 (also referred to as "Circuit H" in Fig. 1) comprises a second transistor T2, a third transistor T3, a fourth transistor T4, a fifth transistor T5, a second diode D2, a third diode D3, a fourth diode D4, and a fifth diode D5, connected in an H-bridge configuration. In the embodiment shown in Fig. 1, the second to fifth transistors T2-T5 are MOSFET transistors. The second diode D2 is associated with the second MOSFET transistor T2. The third diode D3 is associated with the third MOSFET transistor T3. The fourth diode D4 is associated with the fourth MOSFET transistor T4. The fifth diode D5 is associated with the fifth MOSFET transistor T5. Moreover, the H-bridge circuit 140 comprises a zero crossing detector (or zero crossing circuit) 141 and an H-bridge driver 142. The zero crossing circuit 141 consists of a comparator which converts the sine wave output from sine wave oscillator circuit 131 to a square wave output and drives the H-bridge driver 142. The H-bridge driver 142 can be implemented using discrete devices or also as an off-the-shelf IC.

The DC signal from the battery B is transformed and rectified by Circuit A into a rectified sine wave signal, e. g. having 230 Vrms. The rectified sine wave signal is output from Circuit A into Circuit B and is modified in Circuit B by wave shaping, filtering and residual voltage removing. The output from Circuit B is thus an improved rectified sine wave signal having output voltage ripples removed. The output from Circuit B is fed into Circuit H where the rectified sine wave is unfolded to generate the full sine wave using a PWM based switching circuit, i. e. the H-Bridge circuit 140. The full pure sine wave is output to the load L. Specifically, one terminal of the load L is connected to a common node between the second transistor T2, the second diode D2, the fourth transistor T4, and the fourth diode D4, and the other terminal of the load L is connected to a common node between the third transistor T3, the third diode D3, the fifth transistor T5, and the fifth diode D5.

### Industrial Application

The present invention may advantageously be used in applications like emergency LED conversion kits and LED lighting solutions as per EBLF (emergency ballast lumen factor) requirements, for emergency lighting systems, LED drivers and/or emergency luminaires and any other areas including battery-backed lighting devices that comes on automatically in case of a power outage.

When the present invention is used for driving LEDs, the DC from the battery is converted to AC for conventionally driving the ballast of LEDs as the current and/or voltage requirements of the LEDs may not match the DC voltage of the battery. The inverter may be suitable for LEDs if the (maximum) power rating of the inverter is fairly low (as other, incandescent light sources might need more power than the inverter can deliver). The invention is typically used for the LED conversion kits which get activated during an AC mains failure and provide low power AC backup supply to the emergency luminaire or LED lamps (normally running on AC mains). In order to keep the compatibility of various LED lamps, it is preferred to work with a standard output voltage of 230Vac. A typical output power rating (or wattage) of the inverter circuit of the present invention ranges from about 4 to 12 watts.

Those skilled in the art will readily observe that numerous modifications and alterations of the device and method may be made while retaining the teachings of the invention. Accordingly, the above disclosure should be construed as limited only by the metes and bounds of the appended claims.

### List of Reference Numerals:

- B:: Battery
- L:: Load
- 100:: single stage DC/AC inverter
- 110:: inverter circuit (Circuit A)
- 111:: switching converter
- 112:: transformer
- 112a:: primary winding/inductance
- 112b:: secondary winding/inductance
- 113:: sum difference amplifier/comparator
- D1:: recitifying diode/first diode
- R1:: first resistor
- R2:: second resistor
- R3:: third resistor
- R4:: fourth resistor
- R5:: fifth resistor
- 120:: wave shaping, filter and residual voltage removing circuit (Circuit B)
- 121:: comparator
- C1:: capacitor
- T1:: first transistor (npn)
- T2:: second transistor (MOSFET)
- T3:: third transistor (MOSFET)
- T4:: fourth transistor (MOSFET)
- T5:: fifth transistor (MOSFET)
- D2:: second diode
- D3:: third diode
- D4:: fourth diode
- D5:: fifth diode
- 130:: reference full rectified sine wave generator
- 131:: sine wave oscillator circuit
- 132:: full wave diode bridge rectifier
- 140:: H-bridge circuit (Circuit H)
- 141:: zero crossing detector/circuit
- 142:: H-bridge driver

## Claims

1. A wave shaping, filter and residual voltage removing circuit (120), consisting of:
a comparator (121),
a second voltage divider consisting of a series connection of a third resistor (R3) and a fourth resistor (R4) and comprising a first, a second and a third terminal,
a capacitor (C1) comprising a first and a second terminal,
a fifth resistor (R5) comprising a first and a second terminal, and
a first transistor (T1) having a base, and a first and a second terminal,
wherein an input of the wave shaping, filter and residual voltage removing circuit (120) is connected to the first terminal of the second voltage divider, the first terminal of the capacitor (C1),
and the first terminal of the fifth resistor (R5), and configured to receive a full rectified sine wave signal,
wherein the second terminal of the second voltage divider, the second terminal of the capacitor (C1) and the second terminal of the first transistor (T1) are all connected to ground,
wherein the first terminal of the first transistor (T1) is connected to the second terminal of the fifth resistor (R5), and
wherein the comparator (121) has a first input connected to the third terminal of the voltage divider, which is a node between the third resistor (R3) and the fourth resistor (R4), a second input for connection with a reference full rectified sine wave generator (130),
and an output connected to the base of the first transistor (T1), wherein the comparator is configured to compare the full rectified sine wave signal with a reference full rectified sine wave signal, provided by said reference full rectified sine wave generator (130), and drive the base of the first transistor so that an output of the wave shaping, filter and residual voltage removing circuit follows the reference full rectified sine wave signal, hence removing a residual charge from the capacitor.

2. The wave shaping, filter and residual voltage removing circuit (120) according to claim 1, wherein the first transistor (T1) is an npn transistor.

3. A single stage DC/AC inverter (100), comprising:
an inverter circuit (110), consisting of:
a switching converter (111) having a first input (Vin), a second input,
a feedback input (FB), and a connection to ground,
a rectifying diode (D1),
a transformer (112) having a primary winding (112a) and a secondary winding (112b), the primary winding (112a) having a first terminal connected to an input of the inverter circuit (110) for connection with a DC source (B) and connected to a first input (Vin) of the switching converter (111), and having a second terminal connected to the second input of the switching converter (111), the secondary winding (112b) having a first terminal connected to the rectifying diode (D1) and having a second terminal connected to ground, and
a sine modulated feedback loop circuit consisting of a first voltage divider (R1, R2) and an adder/substractor logic having an output connected to the feedback input (FB) of the switching converter (111);
a wave shaping, filter and residual voltage removing circuit (120) as set forth in any one of claims 1 or 2, connected to an output of the inverter circuit (110),
a reference full rectified sine wave generator (130) connected to the adder/substractor logic of the inverter circuit (110) and connected to the second input of the comparator (121) of the wave shaping, filter and residual voltage removing circuit (120), and
an H-bridge circuit (140) connected between an output of the wave shaping, filter and residual voltage removing circuit (120) and ground.

4. The single stage DC/AC inverter (100) of claim 3, wherein the first voltage divider consists of a first resistor (R1) and a second resistor (R2) connected in series between the output of the rectifying diode (D1) and ground, and wherein the adder/subtractor logic comprises a sum difference amplifier (113) having a first input connected to a first node between the first resistor (R1) and the second resistor (R2) and having a second input for connection with a reference full rectified sine wave generator (130).

5. The single stage DC/AC inverter (100) of claim 4, wherein the sum difference amplifier (113) is configured to feed back a feedback signal from the first node between the first resistor (R1) and the second resistor (R2) of the first voltage divider to the feedback input (FB) of the switching converter (111), the feedback signal being modulated by a modulation signal received by the second input.

6. The single stage DC/AC inverter (100) of any one of claims 3 to 5, wherein the H-bridge circuit (140) comprises a second transistor (T2), a third transistor (T3), a fourth transistor (T4), a fifth transistor (T5), a second diode (D2), a third diode (D3), a fourth diode (D4), and a fifth diode (D5), connected in an H-bridge configuration.

7. The single stage DC/AC inverter (100) according to claim 6, wherein the second to fifth transistors (T2-T5) are MOSFET transistors.

## Patentansprüche

1. Wellenformungs-, Filter- und Restspannungsentfernungsschaltung (120), bestehend aus:
einem Komparator (121),
einem zweiten Spannungsteiler, bestehend aus einer Reihenschaltung eines dritten Widerstands (R3) und eines vierten Widerstands (R4) und umfassend einen ersten, einen zweiten und einen dritten Anschluss,
einem Kondensator (C1), umfassend einen ersten und einen zweiten Anschluss,
einem fünften Widerstand (R5), umfassend einen ersten und einen zweiten Anschluss, und
einem ersten Transistor (T1) mit einer Basis und einem ersten und einem zweiten Anschluss,
wobei ein Eingang der Wellenformungs-, Filter- und Restspannungsentfernungsschaltung (120) mit dem ersten Anschluss des zweiten Spannungsteilers, dem ersten Anschluss des Kondensators (C1) und dem ersten Anschluss des fünften Widerstands (R5) verbunden und so konfiguriert ist, dass er ein vollständig gleichgerichtetes Sinuswellensignal empfängt,
wobei der zweite Anschluss des zweiten Spannungsteilers, der zweite Anschluss des Kondensators (C1) und der zweite Anschluss des ersten Transistors (T1) alle mit Masse verbunden sind,
wobei der erste Anschluss des ersten Transistors (T1) mit dem zweiten Anschluss des fünften Widerstands (R5) verbunden ist, und
wobei der Komparator (121) einen ersten Eingang, der mit dem dritten Anschluss des Spannungsteilers verbunden ist, der ein Knotenpunkt zwischen dem dritten Widerstand (R3) und dem vierten Widerstand (R4) ist, einen zweiten Eingang zur Verbindung mit einem vollständig gleichgerichteten Referenzsinuswellengenerator (130), und einen Ausgang, der mit der Basis des ersten Transistors (T1) verbunden ist, aufweist,
wobei der Komparator so konfiguriert ist, dass er das vollständig gleichgerichtete Sinuswellensignal mit einem vollständig gleichgerichteten Referenzsinuswellensignal vergleicht, das von dem vollständig gleichgerichteten Referenzsinuswellengenerator (130) bereitgestellt wird, und die Basis des ersten Transistors so ansteuert, dass eine Ausgabe der Wellenformungs-, Filter- und Restspannungsentfernungsschaltung dem vollständig gleichgerichteten Referenzsinuswellensignal folgt, wodurch eine Restladung von dem Kondensator entfernt wird.

2. Wellenformungs-, Filter- und Restspannungsentfernungsschaltung (120) nach Anspruch 1, wobei der erste Transistor (T1) ein npn-Transistor ist.

3. Einstufiger DC/AC-Wechselrichter (100), umfassend:
eine Wechselrichterschaltung (110), bestehend aus:
einem Schaltwandler (111) mit einem ersten Eingang (Vin), einem zweiten Eingang, einem Rückkopplungseingang (FB) und einer Masseverbindung,
einer Gleichrichterdiode (D1),
einem Transformator (112) mit einer Primärwicklung (112a) und einer Sekundärwicklung (112b), wobei die Primärwicklung (112a) einen ersten Anschluss aufweist, der mit einem Eingang der Wechselrichterschaltung (110) zur Verbindung mit einer Gleichstromquelle (B) verbunden ist und mit einem ersten Eingang (Vin) des Schaltwandlers (111) verbunden ist, und einen zweiten Anschluss aufweist, der mit dem zweiten Eingang des Schaltwandlers (111) verbunden ist, wobei die Sekundärwicklung (112b) einen ersten Anschluss aufweist, der mit der Gleichrichterdiode (D1) verbunden ist, und einen zweiten Anschluss aufweist, der mit Masse verbunden ist, und
einer sinusmodulierten Rückkopplungsschleifenschaltung, bestehend aus einem ersten Spannungsteiler (R1, R2) und einer Addierer-/Subtrahierer-Logik mit einem Ausgang, der mit dem Rückkopplungseingang (FB) des Schaltwandlers (111) verbunden ist;
einer Wellenformungs-, Filter- und Restspannungsentfernungsschaltung (120) nach einem der Ansprüche 1 oder 2, die mit einem Ausgang der Wechselrichterschaltung (110) verbunden ist,
einen vollständig gleichgerichteten Referenzsinuswellengenerator (130), der mit der Addierer-/Subtrahierer-Logik der Wechselrichterschaltung (110) verbunden ist und mit dem zweiten Eingang des Komparators (121) der Wellenformungs-, Filter- und Restspannungsentfernungsschaltung (120) verbunden ist, und
eine H-Brückenschaltung (140), die zwischen einen Ausgang der Wellenformungs-, Filter- und Restspannungsentfernungsschaltung (120) und Masse geschaltet ist.

4. Einstufiger DC/AC-Wechselrichter (100) nach Anspruch 3, wobei der erste Spannungsteiler aus einem ersten Widerstand (R1) und einem zweiten Widerstand (R2) besteht, die zwischen dem Ausgang der Gleichrichterdiode (D1) und Masse in Reihe geschaltet sind, und wobei die Addierer-/Subtrahierer-Logik einen Summendifferenzverstärker (113) mit einem ersten Eingang, der mit einem ersten Knotenpunkt zwischen dem ersten Widerstand (R1) und dem zweiten Widerstand (R2) verbunden ist, und mit einem zweiten Eingang zur Verbindung mit einem vollständig gleichgerichteten Referenzsinuswellengenerator (130) umfasst.

5. Einstufiger DC/AC-Wechselrichter (100) nach Anspruch 4, wobei der Summendifferenzverstärker (113) so konfiguriert ist, dass er ein Rückkopplungssignal von dem ersten Knotenpunkt zwischen dem ersten Widerstand (R1) und dem zweiten Widerstand (R2) des ersten Spannungsteilers zu dem Rückkopplungseingang (FB) des Schaltwandlers (111) rückkoppelt, wobei das Rückkopplungssignal durch ein von dem zweiten Eingang empfangenes Modulationssignal moduliert wird.

6. Einstufiger DC/AC-Wechselrichter (100) nach einem der Ansprüche 3 bis 5, wobei die H-Brückenschaltung (140) einen zweiten Transistor (T2), einen dritten Transistor (T3), einen vierten Transistor (T4), einen fünften Transistor (T5), eine zweite Diode (D2), eine dritte Diode (D3), eine vierte Diode (D4) und eine fünfte Diode (D5) umfasst, die in einer H-Brückenkonfiguration verbunden sind.

7. Einstufiger DC/AC-Wechselrichter (100) nach Anspruch 6, wobei der zweite bis fünfte Transistor (T2-T5) MOSFET-Transistoren sind.

## Revendications

1. Circuit de mise en forme d'onde, de filtrage et d'élimination de tension résiduelle (120), constitué de :
un comparateur (121),
un deuxième diviseur de tension constitué d'une connexion en série d'une troisième résistance (R3) et d'une quatrième résistance (R4) et comprenant une première, une deuxième et une troisième borne,
un condensateur (C1) comprenant une première et une deuxième borne,
une cinquième résistance (R5) comprenant une première et une deuxième borne, et
un premier transistor (T1) ayant une base, et une première et une deuxième borne,
dans lequel une entrée du circuit de mise en forme d'onde, de filtrage et d'élimination de tension résiduelle (120) est connectée à la première borne du deuxième diviseur de tension, à la première borne du condensateur (C1), et à la première borne de la cinquième résistance (R5), et configurée pour recevoir un signal d'onde sinusoïdale redressée complète,
dans lequel la deuxième borne du deuxième diviseur de tension, la deuxième borne du condensateur (C1) et la deuxième borne du premier transistor (T1) sont toutes connectées à la terre,
dans lequel la première borne du premier transistor (T1) est connectée à la deuxième borne de la cinquième résistance (R5), et
dans lequel le comparateur (121) a une première entrée connectée à la troisième borne du diviseur de tension, qui est un nœud entre la troisième résistance (R3) et la quatrième résistance (R4), une deuxième entrée pour connexion avec un générateur d'onde sinusoïdale redressée complète de référence (130), et une sortie connectée à la base du premier transistor (T1),
dans lequel le comparateur est configuré pour comparer le signal d'onde sinusoïdale redressée complète à un signal d'onde sinusoïdale redressée complète de référence, fourni par ledit générateur d'onde sinusoïdale redressée complète de référence (130), et exciter la base du premier transistor de sorte qu'une sortie du circuit de mise en forme d'onde, de filtrage et d'élimination de tension résiduelle suit le signal d'onde sinusoïdale redressée complète de référence, éliminant en conséquence une charge résiduelle du condensateur.

2. Circuit de mise en forme d'onde, de filtrage et d'élimination de tension résiduelle (120) selon la revendication 1, dans lequel le premier transistor (T1) est un transistor npn.

3. Inverseur CC/CA à étage unique (100), comprenant :
un circuit inverseur (110), constitué de :
un convertisseur à découpage (111) ayant une première entrée (Vin), une deuxième entrée, une entrée de rétroaction (FB), et une connexion à la terre,
une diode de redressement (D1),
un transformateur (112) ayant un enroulement primaire (112a) et un enroulement secondaire (112b), l'enroulement primaire (112a) ayant une première borne connectée à une entrée du circuit inverseur (110) pour connexion avec une source CC (B) et connectée à une première entrée (Vin) du convertisseur à découpage (111), et ayant une deuxième borne connectée à la deuxième entrée du convertisseur à découpage (111), l'enroulement secondaire (112b) ayant une première borne connectée à la diode de redressement (D1) et ayant une deuxième borne connectée à la terre, et
un circuit de boucle de rétroaction à modulation sinusoïdale constitué d'un premier diviseur de tension (R1, R2) et d'une logique d'additionneur/soustracteur ayant une sortie connectée à l'entrée de rétroaction (FB) du convertisseur à découpage (111) ;
un circuit de mise en forme d'onde, de filtrage et d'élimination de tension résiduelle (120) selon l'une quelconque des revendications 1 ou 2, connecté à une sortie du circuit inverseur (110),
un générateur d'onde sinusoïdale redressée complète de référence (130) connecté à la logique d'additionneur/soustracteur du circuit inverseur (110) et connecté à la deuxième entrée du comparateur (121) du circuit de mise en forme d'onde, de filtrage et d'élimination de tension résiduelle (120), et
un circuit de pont en H (140) connecté entre une sortie du circuit de mise en forme d'onde, de filtrage et d'élimination de tension résiduelle (120) et la terre.

4. Inverseur CC/CA à étage unique (100) selon la revendication 3, dans lequel le premier diviseur de tension est constitué d'une première résistance (R1) et d'une deuxième résistance (R2) connectées en série entre la sortie de la diode de redressement (D1) et la terre, et dans lequel la logique d'additionneur/soustracteur comprend un amplificateur de somme-différence (113) ayant une première entrée connectée à un premier nœud entre la première résistance (R1) et la deuxième résistance (R2) et ayant une deuxième entrée pour connexion avec un générateur d'onde sinusoïdale redressée complète de référence (130).

5. Inverseur CC/CA à étage unique (100) selon la revendication 4, dans lequel l'amplificateur de somme-différence (113) est configuré pour réinjecter un signal de rétroaction provenant du premier nœud entre la première résistance (R1) et la deuxième résistance (R2) du premier diviseur de tension vers l'entrée de rétroaction (FB) du convertisseur à découpage (111), le signal de rétroaction étant modulé par un signal de modulation reçu par la deuxième entrée.

6. Inverseur CC/CA à étage unique (100) selon l'une quelconque des revendications 3 à 5, dans lequel le circuit de pont en H (140) comprend un deuxième transistor (T2), un troisième transistor (T3), un quatrième transistor (T4), un cinquième transistor (T5), une deuxième diode (D2), une troisième diode (D3), une quatrième diode (D4) et une cinquième diode (D5), connectée dans une configuration de pont en H.

7. Inverseur CC/CA à étage unique (100) selon la revendication 6, dans lequel les deuxième à cinquième transistors (T2-T5) sont des transistors MOSFET.
